# EUROPÄISCHE PATENTSCHRIFT

(11) **EP 1 185 441 B1**
(45) Veröffentlichungstag und Bekanntmachung des Hinweises auf die Patenterteilung: **12.01.2005**
(21) Anmeldenummer: 00945770.6
(22) Anmeldetag: 16.06.2000
(51) Int. Cl.: B60R 21/20

(54) **SICHERHEITSABDECKUNG FÜR EINEN AIRBAG**
SAFETY COVERING FOR AN AIRBAG
PROTECTION DE SECURITE POUR AIRBAG

(30) Priorität: 18.06.1999 DE 29911205 U
(43) Veröffentlichungstag der Anmeldung: 13.03.2002
(73) Patentinhaber: Faurecia Innenraum Systeme GmbH, 76767 Hagenbach (DE)
(72) Erfinder: MAYER, Wolfgang, D-76744 Wörth (DE); SKOWRONNEK, Jürgen, D-51545 Waldbröl (DE); JAHN, Thomas, D-76694 Forst (DE)
(74) Vertreter: Pfenning, Meinig & Partner GbR
(86) Internationale Anmeldenummer: PCT/EP2000/005606
(87) Internationale Veröffentlichungsnummer: WO 2000/078579

(56) Entgegenhaltungen:
- EP-A- 0 867 346
- EP-A- 1 004 481
- DE-A- 4 442 543
- DE-U- 29 912 825

## Beschreibung

Die Erfindung betrifft eine Sicherheitsabdeckung für einen Airbag gemäß dem Oberbegriff des Anspruches 1.

Airbagabdeckungen an Innenverkleidungsteilen von Kraftfahrzeugen, bei denen die Verkleidung aus einem formstabilen Trägerteil und einer Dekorschicht besteht, die durch eine Schaumstoffschicht miteinander verbunden sind, werden beim Stand der Technik häufig als "unsichtbare" Abdeckung ausgeführt. Dabei wird durch eine rückseitige Querschnittsschwächung des Trägerteiles und meist auch der Dekorschicht eine ein- oder zweiflügelige "Klappe" vorgegeben, die durch den sich öffnenden (aufgeblasenen) Gassack des Airbagsystems aufgesprengt wird. Aus der Vielzahl von Schriften, die diesen Stand der Technik vertiefen sei die DE 196 46 548 genannt, der eine zusammenfassende Übersicht über diesen Stand der Technik zu entnehmen ist. Bei diesem Vorgehen sind die aufgesprengten Klappen zum Innenraum des Fahrzeuges hinweisend, sie beinhalten also bei einem Personenaufprall ein Verletzungsrisiko. In DE 196 46 548 wird zur Minderung des Verletzungsrisikos vorgeschlagen, die Durchtrittsöffnung für den Gassack nicht klappenförmig, sondern "spitzoval", ähnlich einem Fischmaul zu gestalten. Da sich aber auch dabei die Aufrißkanten des Trägerteiles zum Insassenraum hin aufwölben, ist das Verletzungsrisiko gegenüber der Klappenlösung zwar gemindert, aber nicht gänzlich ausgeschaltet.

Ein anderer Lösungsansatz des Problems wird in der EP 867 346 Al angegeben: Ein in Bewegung versetztes Bauteil, das Bestandteil der Airbageinrichtung ist, und vor der Expansion des Gassackes in Bewegung gebracht wird, betätigt die Airbagabdeckung so, daß die Klappen der Abdeckung sich im Wesentlichen innerhalb der Außenkontur der Airbagvorrichtung bewegen. Die in dieser Schrift angeführten Beispiele zeigen einen Betätigungsmechanismus, der eine Zwangsführung der Klappen mit Hilfe von Zugnocken und Kulissenführungen aufweist. Eine solche Lösung erschwert die einstückige Fertigung eines Verkleidungsteiles durch das bisher übliche Zusammenschäumen von Trägerteil und Dekorschicht erheblich, da die Zugnocken und die Kulissenführungen nicht mit eingeschäumt werden können. Auch die Anbindung von Abdeckeinrichtungen und Airbagvorrichtung erfordert schwierige Montagearbeiten, da der Schußkanal des Airbags und die Abdeckung einen abgeschlossenen Raum vorgeben, in den von außen schlecht eingegriffen werden kann. Schließlich belasten Trägheitskräfte die Zug- und Führungsnocken der Abdeckung zusätzlich, da die Öffnungsbewegung vor dem Aufblasen des Gassackes der Airbagvorrichtung erfolgen muß, und zwar im Millisekundenbereich. Auch er-fordert der Lösungsvorschlag nach EP 0 867 346 A1 spezielle Airbagvorrichtungen mit einer integrierten Antriebsvorrichtung, die bisher verwendeten Vorrichtungen sind nicht einsetzbar.

Die DE 44 42 543A1 offenbart eine Gassackeinheit in einem Fahrzeug mit einer Sackhülle, die in einer Aufnahme hinter einer Abdeckplatte vertieft und durch eine von der Abdeckplatte lösbare Gassackabdeckung überdeckt liegt. Die Gassackabdeckung ist durch ein an ihr befestigtes, flexibles Band an einem Fahrzeugteil gehalten, welches von der Gassackabdeckung weg, gleitend um das Fahrzeugteil und zur Sackhülle geführt, an dieser in einem bei der Austrittsbewegung der Sackhülle aus der Aufnahme in Richtung des Fahrzeuginnenraums herausbewegten Sackbereich befestigt ist, wodurch die Gassackabdeckung durch die Sackhüllenbewegung mittels des flexiblen Bandes hinter die Abdeckplatte gezogen wird.

Aufgabe der Erfindung ist es, eine "unsichtbare" Airbagabdeckung bei Innenverkleidungsteilen von Fahrzeugen anzugeben,
- die eine einfache und erprobte Fertigung durch Zusammenschäumen von Trägerteil und Dekorschicht ermöglicht,
- die sicherstellt, daß keine Materialanteile des Trägerteiles in den Fahrgastraum gelangen und dort ein Verletzungsrisiko darstellen,
- die es ermöglicht, Airbagvorrichtungen herkömmlicher Bauart einzusetzen, und
- die auch bei hohen Bauteilbeschleunigungen und den daraus resultierenden Beschleunigungskräften sicher funktionsfähig bleibt.

Die Aufgabe wird erfindungsgemäß gelöst durch eine Sicherheitsabdeckung mit den Merkmalen des Anspruches 1, die Ansprüche 2 bis 14 geben vorteilhafte Weiterbildungen der erfindungsgemäßen Sicherheitsabdeckung an.

Die Erfindung betrifft somit eine unsichtbare Sicherheitsabdeckung für einen Airbag, der hinter einem Innenverkleidungsteil angeordnet ist, welches zumindest aus einem Trägerteil, einer Schaumschicht und einer Dekorschicht besteht, wobei
in dem von einer Querschnittsschwächung und/oder einer Materialtrennung im Trägerteil begrenzten Bereich der Sicherheitsabdeckung das Material des Trägerteiles und zumindest Teile der Schaumstoffschicht vor der Entfaltung des Gassackes durch eine Zugvorrichtung aus dessen Einwirkungsbereich entfernbar und hinter das Innenverkleidungsteil verbringbar sind; und sie zeichnet sich dadurch aus, daß die Sicherheitsabdeckung eine Fangkammer für den Abrißbereich des Trägerteiles und für das abgetrennte Material der Schaumstoffschicht vorgesehen ist, welche eine als Abrollwalze ausgebildete Führungskante für ein Zugband besitzt.

Die Verwendung der Fangkammer und die einfache Führung des Zugbandes stellen Maßnahmen dar, die die Handhabung und die Sicherheit deutlich verbessern.

Wenn die Materialanteile der Trägerschicht und zumindest Teile der Schaumstoffschicht aus dem Einwirkungsbereich des Gassackes entfernt sind, überspannt noch die Dekorschicht die Gassack-Öffnung. (Unter dem Begriff "Dekorschicht" sind alle beim Stand der Technik üblichen Werkstoffe, wie vorgeformte Thermoplastfolien und gesinterte Slush-Häute, zu verstehen). Diese Dekorfolien sind leicht vom Gassack zu durchstoßen, vor allem dann, wenn sie im Durchstoßbereich Querschnittsschwächungen aufweisen. Solche Querschnittsschwächungen können mechanisch hergestellte Einritzungen der Rückseite der Dekorschicht sein, in zunehmenden Maße aber auch Mikroperforationen, die mit Hilfe von Laserstrahlen eingebracht werden. Da die Querschnittsschwächungen beliebig vorgebbar sind, läßt sich die Aufreißcharakteristik der Dekorschicht beeinflussen, und damit auch die Entfaltungscharakteristik des Gassackes. Die Dekorschicht hat erstens eine geringere Masse, zweitens besteht sie aus einem nachgiebig weichen Werkstoff, so daß sie unter üblichen Betriebsbedingungen keine Verletzungsgefahr für die Insassen und kein Beschädigungsrisiko für den Gassack darstellen.

Das Entfernen des Trägerteilmaterials aus dem Einwirkungsbereich des sich entfaltenden Gassackes kann in vorteilhafter Weise dadurch geschehen, daß dieser Bereich des Trägerteiles näherungsweise über seine gesamte Breite rückseitig mit einem entsprechend breiten Zugband fest verbunden ist, das parallel zu einer den Abrißbereich vorgebenden Querschnittsschwächung angreift, und zwar mit einer näherungsweise senkrecht zum Trägerteil gerichteten Zugkraft, die durch eine von einem Fahrsituationssensor auslösbare Zugvorrichtung aufgebracht wird. Die flächige Anbindung des Abrißbereiches hat den Vorteil einer optimalen Krafteinleitung bei gleichzeitiger Minimierung der zu bewegenden Massen, womit die Funktionstüchtigkeit der Anordnung auch bei großen Beschleunigungen gewährleistet bleibt. Das Zugband kann dabei in einfacher Weise so geführt werden, daß es näherungsweise senkrecht zur Trägerteilfläche angreift (in Richtung der Flächennormale), wodurch ein sicherer Abriß längs der Querschnittsschwächung erzielbar ist, zumal das Zugband sehr viel höhere Kräfte einleiten kann, als beispielsweise Führungsnocken in einer Kulissenführung aushalten. Das Zugband wird bevorzugt flächig geklebt und mit dem entsprechenden Trägerteilbereich verbunden. Im Krafteinleitungsbereich können die in der Klebung auftretenden Schälspannungen durch Zusatzmaßnahmen, beispielsweise durch eine Nietreihe, aufgefangen werden.

Sind keine weiteren konstruktiven Maßnahmen vorgesehen, so erfolgt die Trennung des Trägerteilabrisses von der Dekorschicht in der Schaumstoffschicht, die die geringste Materialfestigkeit in den System Trägerteil./.Schaum./.Dekorschicht aufweist. Ein Teil des Schaumes wird, da das Aufreißen der Schaumstoffschicht unkontrolliert erfolgt, an der Dekorschicht verbleiben und kann mit dem Gassack in den Fahrgastraum gelangen. Dem kann entgegengewirkt werden, indem die Dekorschicht auf der Sichtseite abgewandten Seite im Airbag-Bereich zumindest partiell mit einer haftungsmindernden Beschichtung versehen wird, die die Ablösung der Schaumstoffschicht von der Dekorschicht erleichtert. Eine weitere Möglichkeit besteht darin, das Zugband bis in die Schaumstoffschicht zu erstrekken; eine Ausführung, die beispielsweise dann keine konstruktiven Schwierigkeiten bereitet, wenn eine Materialtrennung eine Seite des Abrißbereiches begrenzt. Der sich in den Schaum erstreckende Bereich des Zugbandes verläuft dabei zweckmäßiger Weise dicht unter der Dekorschicht. Zwei Wirkungsweisen sind möglich:
1. Der Zugbandbereich im Schaum definiert eine Abrißzone im Schaum (Schwachstellenfunktion).
2. Der Zugbandbereich im Schaum ist fest mit der Rückseite der Dekorschicht verbunden (Funktion als Abrißhilfe für die Dekorschicht).

Im zweiten Fall besitzt die Dekorschicht vorzugsweise ebenfalls eine umlaufende Querschnittsschwächung, die in ihrem Verlauf der Querschnittsschwächung im Trägerteil entspricht und wird zusammen mit dem Trägerteilabriß (und der Schaumschicht) hinter das Innenverkleidungsteil verbracht. Auch hierbei kann das Zugband große Kräfte auf die Dekorschicht übertragen und so deren Aufreißen zuverlässig bewirken.

Die Zugvorrichtung kann linear wirken, sie kann aber auch eine Wickelvorrichtung sein, ähnlich wirkend wie ein Gurtstraffer. Die Anwendung eines Zugbandes gestattet dabei Umlenkungen der Zugvorrichtung, so daß eine optimale Raumnutzung des Einbauortes möglich wird. Bevorzugt wird ein pyrotechnischer Antrieb, oder zumindest eine pyrotechnische Auslösung eines anderen Wirkmechanismusses (elektrisch, pneumatisch, mechanisch wirkend, wie beispielsweise ein pneumatisch angetriebener Stufenkolben) verwendet worden, weil in diesem Fall der Fahrbetriebssensor des Airbags auch zur Auslösung des Zugbandantriebes mit verwendet werden kann. Bei einem pyrotechnischen Antrieb des Zugbandes kann der pyrotechnische Druckgenerator der Airbagvorrichtung für die Freilegung des Schußkanals mit genutzt werden. Die verzögerte Auslösung des Airbags kann dabei durch elektronische Signalverzögerung in an sich bekannter Weise einfach realisiert werden. Bei dieser Lösung ist allerdings ein speziell gestalteter pyrotechnischer Druckgenerator notwendig, Soll ein Airbagmodul in üblicher Bauweise angewendet werden, so ist es zweckmäßig, wenn Zugvorrichtung und Airbagmodul getrennte Antriebe besitzen. Auch bei dieser Lösung ist die Verwendung pyrotechnischer Antriebe vorteilhaft. Ein weiterer Vorteil bei getrennten Airbagsaggregaten in Verbindung mit der Flexibilität der Zugbänder ist es, daß die Raumnutzung im Airbagbereich optimierbar ist, wodurch zugleich die Montagefreundlichkeit verbessert wird.

Einen zusätzlichen Gewinn an Funktionssicherheit kann man erhalten, wenn der Abrißbereich des Trägerteiles eine Mehrzahl von parallel zur Abrißkante angeordnete Querschnittsschwächungen besitzt. Auf diese Weise kann dem seiner Natur nach steifen Abrißbereich des Trägerteiles eine in Einzugsrichtung zur Fangkammer hin orientierte Biegeweichheit vermittelt werden.

Die Dekorschichten sind im Regelfall weich und besitzen geringe Massen, stellen also für die Insassen kein Risiko dar.

Bei Sicherheitseinrichtungen müssen aber auch außergewöhnliche Betriebszustände in Betracht gezogen werden, für die Dekorschicht zum Beispiel deren Verhalten bei außergewöhnlicher Kälte. Hier kann, abhängig vom Werkstoff der Dekorschicht, eine Materialversprödung auftreten, mit der Folge, daß der Gassack beim Durchstoßen der Dekorschicht deren Trümmerbruch verursachen könnte. Versprödete Trümmerstücke im Fahrgastraum müssen aber mit Sicherheit auszuschließen sein, selbst im Falle eines unwahrscheinlich, aber möglichen Betriebszustandes. In einfacher Weise kann eine mögliche Kälteversprödung kompensiert werden, wenn die Dekorschicht im Einwirkungsbereich des Gassackes rückseitig mit einem netzförmigen Gewebe aus nicht kälteversprödenden Werkstoffen, beispielsweise aus Naturfasern, verbunden ist, das die Querschnittsschwächungen der Dekorfolie nicht mit überdeckt. Dadurch, daß zwar ein Trümmerbruch der Dekorschicht bei Extremkälte nicht vermeidbar ist, die Bruchstücke aber fest an einem nicht versprödenden Netz verankert sind, sind frei im Fahrgastraum fliegende Trümmer ausgeschlossen. Da bei dieser Lösung die Querschnittsschwächung der Dekorfolie im Durchstoßbereich des Gassackes in ihrer Funktion nicht beeinträchtigt ist (weil nicht abgedeckt), ist das Aufreißen der Dekorschicht in der vorgesehenen Geometrie sichergestellt. Man kann aber auch die Dekorfolie zumindest im Einwirkungsbereich des Gassackes rückseitig mit einer flächigen Heizvorrichtung verbinden und eine auftretende Materialversprödung durch tiefe Temperaturen "wegheizen". Die Schaumstoffschicht unterbindet dabei den Wärmefluß zum Trägerteil hin, so daß der Wärmebedarf einer solchen Lösung nur gering ist. Eine derartige Bereichsheizung der Dekorschicht, kann natürlich auch bei "normalen" Temperaturen genutzt werden, um die Festigkeit der Dekorschicht partiell zu senken. Da eine derartige Flächenheizung nicht nur die Dekorfolie, sondern auch eine dünne Schicht angrenzenden Schaumes erwärmt, mit Temperaturmaximum in der Grenzfläche, wird der Schaum an der Grenzfläche thermisch geschwächt, wodurch eine definierte Trennung von Dekorschicht und Schaum in der Grenzschicht bewirkt wird, wenn der Funktionsfall für die Sicherheitsabdeckung eintritt. Die technische Realisierung der Dekorschichtheizung bereitet keine Schwierigkeiten, der Stand der Technik bietet mehrere Lösungen an, beispielsweise Heizfolien oder Heizleiteraufdrukke, die rückseitig auf die Dekorschicht applizierbar sind.

Eine erfindungsgemäße Sicherheitsabdeckung kann auch in mehrere Abtrennbereiche für das Material des Trägerteiles und für das Material der Schaumstoffschicht unterteilt sein, die jeweils für sich gesondert hinter das Innenverkleidungsteil verbringbar sind, mit dem Vorteil, daß die zu bewegenden Massen verkleinert werden, und daß problematische Raumverhältnisse besser berücksichtigt werden können. Bei allen Varianten in der Ausgestaltung des Erfindungsgedankens ist der Zusatzaufwand gegenüber dem Stand der Technik gering (außer natürlich für eine zusätzlich benötigte Zugvorrichtung oder speziell angepaßte Airbagvorrichtung), vor allem aber sind alle Zusatzelemente im Bereich von Trägerteil, Schaumstoff- und Dekorschicht vor dem Zusammenschäumen dieser Teile bei guter Zugänglichkeit anbringbar und behindern das Zusammenschäumen nicht, so daß eine bewährte Fertigungstechnik beibehalten werden kann.

Die Erfindung sei nunmehr anhand der Figuren 1 bis 4 näher beschrieben. Es zeigen:
- Fig. 1: in einer schematischen Schnittdarstellung eine Sicherheitsabdeckung mit einer Fangkammer für den Materialabriß,
- Fig. 2: eine Ausschnittvergrößerung aus Fig. 1 zur Erläuterung der Materialschwächung,
- Fig. 3: eine 2-teilige Sicherheitsabdeckung mit einem in die Schaumstoffschicht geführten Zugband, in gleicher Darstellungsart wie Fig. 1, und schließlich
- Fig. 4: eine Ausschnittsvergrößerung aus Fig. 3, zur Erläuterung des Stoßbereiches zwischen den Abrißzonen.

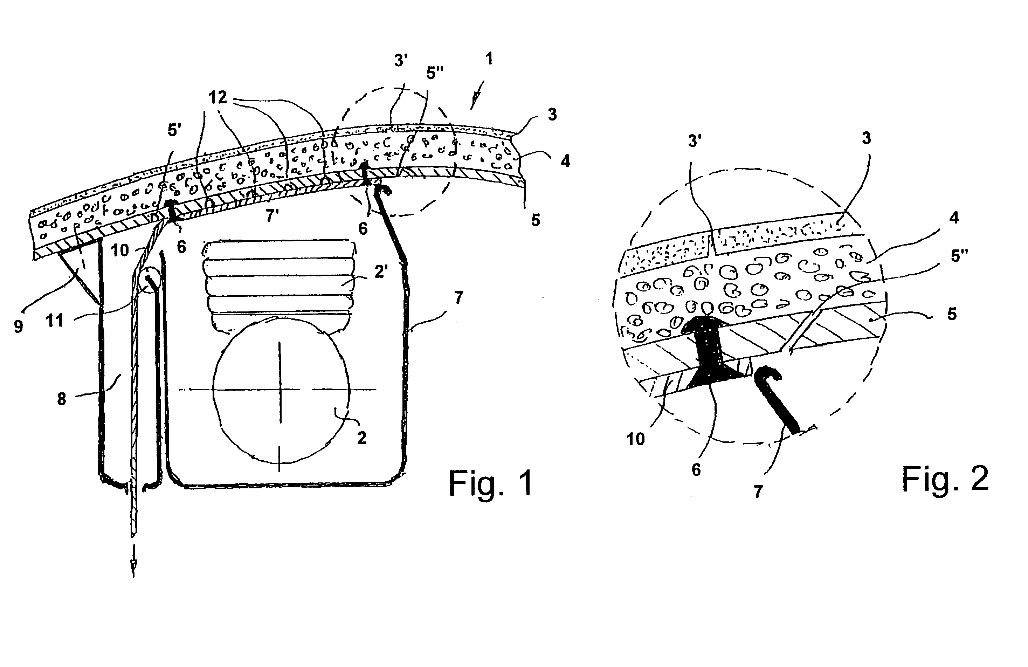

In Fig. 1 ist mit 1 das Verkleidungsteil bezeichnet, das sich aus dem Trägerteil 5, der Schaumstoffschicht 4 und der Dekorschicht 3 zusammensetzt. Diese Elemente sind im zum Stand der Technik gehörenden Verfahren zusammengeschäumt. Die schematisch dargestellte Airbagvorrichtung umfaßt den Gasgenerator 2 und den Gassack 2'. Sie ist in dem Gehäuse 7 angeordnet, dessen oberer Öffnungsbereich 7' den Einwirkungsbereich des expandierenden Gassackes 2' in etwa entspricht. Das Trägerteil 5 besitzt die Querschnittsschwächung 5', die eine Seite des Abdeckungsbereiches begrenzt. Die andere Seite dieses Bereiches wird durch die Materialtrennung 5" im Trägerteil 5 vorgegeben. Diese Materialtrennung 5" kann, wenn sie beispielsweise durch Laserstrahlen ("lasern") hergestellt wird, in der dargestellten Weise schräg verlaufenden und so den Abdeckbereich gegen ein Eindrücken von außen abstützen. Ein Zugband 10 ist ganzflächig mit dem Trägerteil verklebt und mit den Sicherheitsnieten 6 gegen Schälspannungen gesichert.

Zwischen der Sollbruchstelle 5' und der Materialtrennung 5" verlaufen Materialschwächungen 12, und zwar parallel zur Sollbruchstelle 5', um den Abrißbereich des Trägerteiles 5 für den besseren Einzug in die Fangkammer 8 biegeweicher zu machen. Die Fangkammer 8 ist gesondert vom Gehäuse 7 der Airbagvorrichtung mit Hilfe des Befestigungswinkels 9 rückseitig am Trägerteil 5 befestigt. Der Einzugsrand der Fangkammer ist als Rollenführung 11 ausgebildet, mit deren Hilfe das Zugband 10 geführt und so umgelenkt wird, daß die Zugkräfte näherungsweise senkrecht zur Abrißfläche angreifen. Die Zugvorrichtung ist hierbei in den Figuren nicht mit dargestellt, ihre Gestaltung hat auf die Funktion der Sicherheitsabdeckung keinen Einfluß. Die Pfeile geben in den Figuren die Zugrichtung an. Wird das Zugband 10 in Pfeilrichtung gezogen, so reißt zunächst die Sollbruchstelle 5' und der Trägerteilbereich zwischen 5' und der Materialtrennung 5" wird zur Fangkammer 8 gezogen. Dabei bleiben Schaumstoffbereiche an dem Abriß des Trägerteiles 5 haften (die Materialtrennung erfolgt im "schwächsten" Werkstoff) und werden mit dem Trägerteilabriß im die Fangkammer 8 mitgenommen. Der Einzug in die Kammer 8 über die Abrollkante 11 wird durch Schwachstellen 12 begünstigt, die den Abriß des Trägerteiles 5 in Einzugsrichtung biegeweich machen. Die Dekorschicht 3 überdeckt noch den Wirkungsbereich 7'. Sie hat eine Vorschwächung 3' (durch "Messern" oder "Lasern" in an sich bekannter Weise hergestellt) an der sie bei der nachfolgenden Expansion des Gassackes 2' aufreißt und durchstoßen wird. Materialtrennung 5" und die Vorschwächung 3' der Dekorschicht 3 sind bei gleicher Benennung der Teile in Fig. 2 vergrößert dargestellt.

Das Zugband 10 kann an sich aus beliebigen Material bestehen, es muß nur 3 Bedingungen erfüllen: Es muß biegeweich (schlaff) sein, es muß hinreichend Zugkräfte übertragen können, und es darf nicht temperaturabhängig verspröden oder erweichen. Beispielsweise kann das Zugband aus einem Material bestehen, wie es für Sicherheitsgurte verwendet wird.

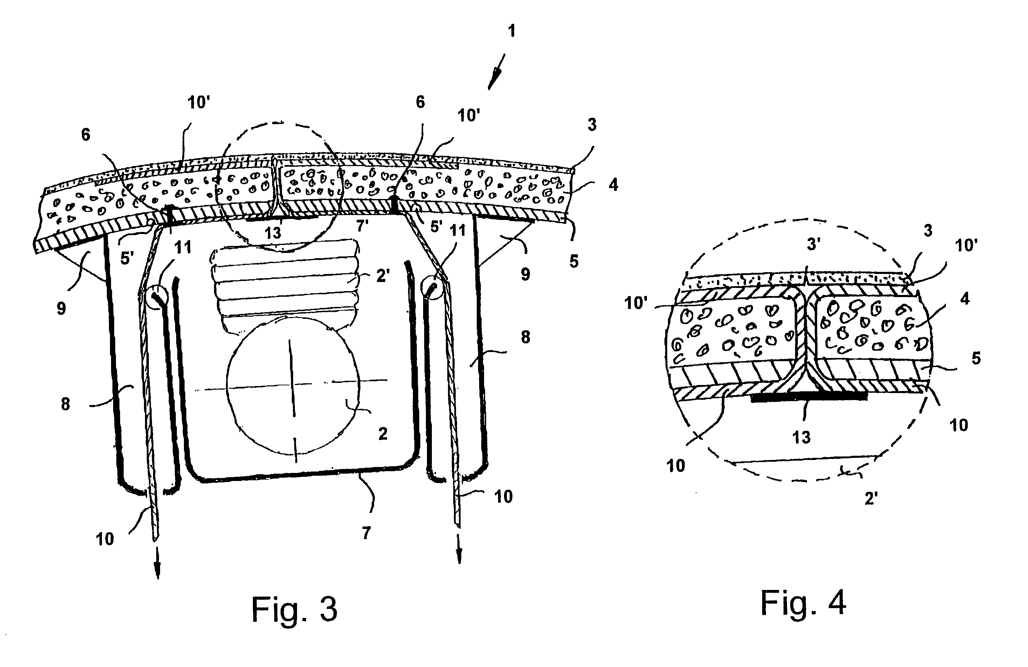

Die Figur 3 erläutert eine Ausführungsform, bei der der Abrißbereich des Trägerteiles 5 in zwei Abrißbereiche unterteilt ist, wobei das unterteilte Zugband 10 mit seinen Bereichen 10' in die jeweilige Schaumstoffschicht hineinreicht. Die leicht aufreißbare Versiegelung 13 hat dabei lediglich die Funktion, beim Zusammenschäumen des Verkleidungsteiles unerwünschten Schaumaustritt zu unterbinden. Teile mit gleicher Funktion sind mit gleichen Ziffern wie in Fig. 2 benannt.

Bei dem Anwendungsfall der Fig. 3 kann ein Zugband zweckmäßig sein, das durchschäumbar ist, beispielsweise durch eine Gitter- oder Maschenstruktur. Auf diese Weise kann die Stoßstelle der beiden Abrißbereiche gut abgestützt werden. Die Zugbandbereiche 10' können mit der Dekorschicht 3 fest verbunden sein (Schweißen, Kleben), wobei die Vorschwächung 3' im Stoßstellenbereich angeordnet ist, wie Fig. 4 vergrößert erläutert. Bei gleicher grundsätzlicher Funktion wie die Anordnung nach Figur 2 (der Abriß erfolgt zunächst an den Sollbruchstellen 5') wird dann die Dekorschicht ebenfalls durch das Zugband 10 beispielsweise durch seine Bereiche 10' beaufschlagt und reißt an der Vorschwächung 3', wird also nicht vom Gassack 2' durchstoßen. Die Abrißbereiche der Sicherheitsabdeckung werden ohne Rest in die Fangkammern 8 eingezogen, ehe der Gassack expandiert.

Die Dekorschicht 3 kann auf der der Sichtseite abgewandten Seite im Bereich zwischen der Sollbruchstelle 5' und der Materialtrennung 5" zumindest partiell mit einer haftungsmindernden Beschichtung versehen sein, so daß die Ablösung der Schaumstoffschicht 4 (Fig. 1) bzw. des Zugbandes 10' von der Dekorschicht 3 erleichtert wird.

Die Beispiele der Figuren sind Erläuterungen, andere Ausführungen des Erfindungsgedankens sind möglich und können je nach Verkleidungsteil ebenfalls zweckmäßig sein.

## Patentansprüche

1. Unsichtbare Sicherheitsabdeckung für einen Airbag, der hinter einem Innenverkleidungsteil angeordnet ist, welches zumindest aus einem Trägerteil (5), einer Schaumschicht (4) und einer Dekorschicht (3) besteht, wobei
in dem von einer Querschnittsschwächung (5') und/oder einer Materialtrennung (5") im Trägerteil (5) begrenzten Bereich der Sicherheitsabdeckung das Material des Trägerteiles (5) und zumindest Teile der Schaumstoffschicht (3) vor der Entfaltung des Gassackes (2') durch eine Zugvorrichtung aus dessen Einwirkungsbereich (7') entfernbar und hinter das Innenverkleidungsteil (1) verbringbar sind,
**dadurch gekennzeichnet,**
**daß** die Sicherheitsabdeckung eine Fangkammer (8) für den Abrißbereich des Trägerteiles (5) und für das abgetrennte Material der Schaumstoffschicht (4) vorgesehen ist, welche eine als Abrollwalze ausgebildete Führungskante (11) für ein Zugband (10) besitzt.

2. Sicherheitsabdeckung nach Anspruch 1, **dadurch gekennzeichnet, daß** die nach der Entfernung des Trägerteilmaterials und Teilen der Schaumstoffschicht (4) den Einwirkungsbereich (7') des Gassackes (2') noch überspannende Dekorschicht (3) Querschnittsschwächungen (3') besitzt, und von dem sich entfaltenden Gassack (2') durchstoßbar ist.

3. Sicherheitsabdeckung nach Anspruch 1 oder 2, **dadurch gekennzeichnet, daß** der aus dem Einwirkungsbereich (7') des sich entfaltenden Gassakkes (2') entfernbare Materialanteil des Trägerteiles (5) fest mit dem sich näherungsweise über die ganze Breite des Einwirkungsbereiches (7') erstreckenden Zugband (10) verbunden ist, wobei das Zugband (10) näherungsweise senkrecht zum Trägerteil (5) und parallel zu einer Querschnittsschwächung (5') angreift und mit der sensorauslösbaren Zugvorrichtung verbunden ist.

4. Sicherheitsabdeckung nach einem der Ansprüche 1 bis 3, **dadurch gekennzeichnet daß** das Zugband (10) sich bis in die Schaumstoffschicht (4) erstreckt.

5. Sicherheitsabdeckung nach einem der Ansprüche 1 bis 4, **dadurch gekennzeichnet, daß** die Zugvorrichtung eine linear wirkende Zugvorrichtung ist.

6. Sicherheitsabdeckung nach einem der Ansprüche 1 bis 5, **dadurch gekennzeichnet daß** die Zugvorrichtung eine Wickelvorrichtung ist.

7. Sicherheitsabdeckung nach einem der Ansprüche 1 bis 6 **dadurch gekennzeichnet, daß** Zugvorrichtung und Airbag einen gemeinsamen Auslösesensor besitzen.

8. Sicherheitsabdeckung nach einem der Ansprüche 1 bis 7, **dadurch gekennzeichnet daß** Zugvorrichtung und Airbag einen gemeinsamen pyrotechnischen Druckgenerator mit gegeneinander verzögerter Druckwirkung besitzen.

9. Sicherheitsabdeckung nach einem der Ansprüche 1 bis 8, **dadurch gekennzeichnet daß** Zugvorrichtung und Airbag getrennte pyrotechnische Druckgeneratoren besitzen.

10. Sicherheitsabdeckung nach einem der Ansprüche 1 bis 9, **dadurch gekennzeichnet, daß** der Abrißbereich des Trägerteiles (5) eine Mehrzahl von parallel zur Abrißkante (5') angeordnete Querschnittsschwächung (12) besitzt.

11. Sicherheitsabdeckung nach einem der Ansprüche 1 bis 10, **dadurch gekennzeichnet. daß** die Dekorschicht (3) im Einwirkungsbereich des Gassackes rückseitig mit einem netzförmigen Gewebe aus nicht kälteversprödenden Werkstoff verbunden ist, das die Querschnittsschwächung (3') nicht mit überdeckt.

12. Sicherheitsabdeckung nach einem der Ansprüche 1 bis 11, **dadurch gekennzeichnet, daß** die Dekorschicht im Einwirkungsbereich, (7') rückseitig mit einer flächigen Heizvorrichtung (Heizfolie) verbunden ist.

13. Sicherheitsabdeckung nach einem der Ansprüche 1 bis 12, **dadurch gekennzeichnet, daß** die Abdekkung in mehrere Abtrennbereiche für das Material des Trägerteiles (5) und für das Material der Schaumstoffschicht (3) unterteilt ist, die jeweils gesondert hinter das Innenverkleidungsteil (1) verbringbar sind.

14. Sicherheitsabdeckung nach einem der Ansprüche 1 bis 13, **dadurch gekennzeichnet, daß** die Dekorschicht (3) auf der der Sichtseite abgewandten Seite in dem von der Querschnittsschwächung (5') und/oder der Materialtrennung (5") im Trägerteil (5) begrenzten Bereich zumindest partiell mit einer haftungsmindernden Beschichtung versehen ist.

## Claims

1. Invisible safety cover for an airbag, located behind an internal trim part, and consisting of at least one carrier part (5), one foam layer (4), and a decorative layer (3), whereby the material of the carrier part (5) and at least parts of the foam layer (3) can be removed from the effective area (7') of the same and positioned behind the internal trim part (1) within the area of the safety cover bordered by a cross-sectional weak point (5') and/or a material separation (5") within the carrier part (5) prior to unfolding the gas bag (2') via a pulling mechanism, **characterised in that** the safety cover incorporates a catchment chamber (8) for the tear-off section of the carrier part (5) and for the separated material of the foam layer (4), which in turn is equipped with a guiding edge (11) in the form of an unrolling cylinder for a pulling tape (10).

2. Safety cover according to Claim 1, **characterised in that** the decorative layer (3) still straddling the effective area (7') of the gas bag (2') following the removal of the carrier part material and parts of the foam layer (4) incorporates cross-sectional weak points (3'), and **in that** the same can be pierced by the unfolding gas bag (2').

3. Safety cover according to Claim I or 2, **characterised in that** the material section of the carrier part (5) that is removable from the effective area (7') of the unfolding gas bag (2') is firmly connected with the puling tape (10) proximately positioned across the entire width of the effective area (7'), whereby the pulling tape (10) is proximately engaged vertical in relation to the carrier part (5) and parallel to a cross-sectional weak point (5'), and whereby the same is connected with the sensor-activated pulling mechanism.

4. Safety cover according to one of the Claims 1 to 3, **characterised in that** the pulling tape (10) extends into the foam layer (4).

5. Safety cover according to one of the Claims 1 to 4, **characterised in that** the pulling mechanism consists of a linear pulling mechanism.

6. Safety cover according to one of the Claims 1 to 5, **characterised in that** the pulling mechanism consists of a winding means.

7. Safety cover according to one of the Claims 1 to 6, **characterised in that** the pulling mechanism and the airbag are equipped with a common activating sensor.

8. Safety cover according to one of the Claims 1 to 7, **characterised in that** the pulling mechanism and the airbag are equipped with a common pyrotechnical pressure generator with mutually delayed pressure effect.

9. Safety cover according to one of the Claims 1 to 8, **characterised in that** the pulling mechanism and the airbag are equipped with separate pyrotechnical pressure generators.

10. Safety cover according to one of the Claims 1 to 9, **characterised in that** the tear-off section of the carrier part (5) incorporates a multitude of cross-sectional weak points (12) arranged in parallel to the tear-off edge (5').

11. Safety cover according to one of the Claims 1 to 10, **characterised in that** the rear of the decorative layer (3) within the effective area of the gas bag is equipped with a net-shaped web made of a material that does not become brittle with cold, and that does not cover the cross-sectional weak point (3').

12. Safety cover according to one of the Claims 1 to 11, **characterised in that** the rear of the decorative layer within the effective area (7') is equipped with a spatial heating means (heated foil).

13. Safety cover according to one of the Claims 1 to 12, **characterised in that** the cover is sub-divided into several tear-off sections for the material of the carrier part (5) and for the material of the foam layer (3), which can each be positioned separately behind the internal trim part (1).

14. Safety cover according to one of the Claims 1 to 13, **characterised in that** the decorative layer (3) is equipped at least in part with an adhesion-reducing coating within the area bordered by the cross-sectional weak points (5') and/or the material separation (5") within the carrier part (5) on the side that faces away from the visual side.

## Revendications

1. Revêtement de sécurité invisible pour airbag, qui est disposé derrière un élément de garniture intérieure qui se compose d'au moins un élément de support (5), d'une couche de mousse (4) et d'une couche décorative (3), dans lequel
dans la zone du revêtement de sécurité délimitée par une atténuation de section (5') et/ou une séparation de matériau (5") dans l'élément de support (5), le matériau de l'élément de support (5) et au moins des parties de la couche de mousse (3) peuvent, avant le déploiement du sac de gaz (2'), être retirés de sa zone d'action (7') par un dispositif de traction et être amenés derrière l'élément de garniture intérieure (1),
**caractérisé en ce que** dans le revêtement de sécurité est prévue une chambre d'arrêt (8) pour la zone de rupture de l'élément de support (5) et pour le matériau séparé de la couche de mousse (4), qui possède une arête de guidage (11) exécutée en tant que cylindre de roulement pour un ruban de traction (10).

2. Revêtement de sécurité selon la revendication 1, **caractérisé en ce que** la couche décorative (3) qui enjambe encore la zone d'action (7') du sac de gaz (2') après enlèvement du matériau de l'élément de support et des parties de la couche de mousse (4) possède des atténuations de section (3') qui peuvent être traversées par le sac de gaz (2') qui se déploie.

3. Revêtement de sécurité selon la revendication 1 ou 2, **caractérisé en ce que** la fraction de matériau de l'élément de support (5) qui peut être enlevée de la zone d'action (7') du sac de gaz qui se déploie (2') est fermement reliée au ruban de traction (10) qui s'étend approximativement sur toute la largeur de la zone d'action (7'), le ruban de traction (10) agissant de façon approximativement verticale par rapport à l'élément de support (5) et parallèlement à une atténuation de section (5') et est relié au dispositif de traction qui peut être déclenché par un capteur.

4. Revêtement de sécurité selon l'une des revendications 1 à 3, **caractérisé en ce que** le ruban de traction (10) s'étend jusque dans la couche de mousse (4).

5. Revêtement de sécurité selon l'une des revendications 1 à 4, **caractérisé en ce que** le dispositif de traction est un dispositif de traction qui agit linéairement.

6. Revêtement de sécurité selon l'une des revendications 1 à 5, **caractérisé en ce que** le dispositif de traction est un dispositif à enroulement.

7. Revêtement de sécurité selon l'une des revendications 1 à 6, **caractérisé en ce que** le dispositif de traction et l'airbag possèdent un capteur de déclenchement commun.

8. Revêtement de sécurité selon l'une des revendications 1 à 7, **caractérisé en ce que** le dispositif de traction et l'airbag possèdent un générateur de pression pyrotechnique commun présentant un effet de pression retardé l'un par rapport à l'autre.

9. Revêtement de sécurité selon l'une des revendications 1 à 8, **caractérisé en ce que** le dispositif de traction et l'airbag possèdent des générateurs de pression pyrotechniques séparés.

10. Revêtement de sécurité selon l'une des revendications 1 à 9, **caractérisé en ce que** la zone de rupture de l'élément de support (5) possède plusieurs atténuations de section (12) disposées parallèlement à l'arête de rupture (5').

11. Revêtement de sécurité selon l'une des revendications 1 à 10, **caractérisé en ce que** la couche décorative (3) est reliée dans la zone d'action du sac de gaz, côté arrière, à un tissu maillé d'un matériau résistant aux basses températures et qui ne recouvre pas l'atténuation de section (3').

12. Revêtement de sécurité selon l'une des revendications 1 à 11, **caractérisé en ce que** la couche décorative est reliée, dans la zone d'action (7'), côté arrière, à un dispositif de chauffage plan (feuille chauffante).

13. Revêtement de sécurité selon l'une des revendications 1 à 12, **caractérisé en ce que** le revêtement est subdivisé en plusieurs zones de séparation pour le matériau de l'élément de support (5) et pour le matériau de la couche de mousse (3), lesquelles peuvent être amenées séparément derrière l'élément de garniture intérieure (1).

14. Revêtement de sécurité selon l'une des revendications 1 à 13, **caractérisé en ce que** la couche décorative (3), sur le côté opposé au côté visible, dans la zone délimitée par l'atténuation de section (5') et/ou de la séparation de matériau (5") dans l'élément de support (5), est pourvue au moins partiellement d'un revêtement réduisant l'adhérence.
